(19) Europäisches Patentamt / European Patent Office / Office européen des brevets

(11) **EP 4 458 617 A1**

(12) **EUROPEAN PATENT APPLICATION**
published in accordance with Art. 153(4) EPC

(43) Date of publication:
**06.11.2024 Bulletin 2024/45**

(21) Application number: **22926404.9**

(22) Date of filing: **16.02.2022**

(51) International Patent Classification (IPC):
*B60R 16/023* (2006.01)

(52) Cooperative Patent Classification (CPC):
**B60R 16/023**

(86) International application number:
**PCT/CN2022/076457**

(87) International publication number:
**WO 2023/155066 (24.08.2023 Gazette 2023/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventor: **SHEN, Peiyao
Shenzhen, Guangdong 518129 (CN)**

(74) Representative: **Gill Jennings & Every LLP
The Broadgate Tower
20 Primrose Street
London EC2A 2ES (GB)**

(54) **CONTROL METHOD, APPARATUS AND SYSTEM**

(57)     A control method is provided, and includes: controlling a prompt apparatus to output first information, where the first information indicates a first use mode of a window; and controlling the window to perform a first operation corresponding to a second use mode. A control apparatus, a control system, a terminal, and a computer-readable storage medium are also disclosed.

```
                                                    ┌ S301
┌─────────────────────────────────────────────────────────────────┐
│ A control device 101 controls a prompt apparatus to output first  │
│   information, where the first information indicates a first use   │
│                mode of a window 102                               │
└─────────────────────────────────────────────────────────────────┘
                              │
                              ▼                      ┌ S302
┌─────────────────────────────────────────────────────────────────┐
│ The control device 101 controls the window 102 to perform a first │
│           operation corresponding to a second use mode            │
└─────────────────────────────────────────────────────────────────┘
```

FIG. 3

**Description**

**TECHNICAL FIELD**

This application relates to the field of intelligent control technologies, and in particular, to the field of internet of vehicles technologies, and provides a control method, apparatus, and system.

**BACKGROUND**

Conventionally, opening or closing of a window is controlled by a user, and automatic control of opening or closing of a window cannot be implemented. Therefore, user experience is poor. For example, when a vehicle is in a scenario in which a beast or a vicious person scratches at a window, even if a person in the vehicle presses a window closing button, an anti-clamping function of the window prevents the window from being closed in time. As a result, the beast or the vicious person intrudes into the vehicle, causing low safety of using the vehicle by the user. For another example, a vehicle is in a sandstorm or rainy scenario. If a user fails to close a window in time, sandstorm or rain enters the vehicle, affecting driving safety and riding experience of the user. For another example, a vehicle is in a tunnel scenario. If a user fails to close a window in time, a driver is interfered by high decibel noise. Consequently, the driver's reaction is affected, and a traffic accident may be caused.

Therefore, how to flexibly control a window to improve user experience and safety of using a vehicle by a user is an urgent problem to be resolved.

**SUMMARY**

This application provides a control method, apparatus, and system, to flexibly control a window, so as to improve user experience and safety of using a vehicle by a user.

According to a first aspect, an embodiment of this application provides a control method. The method is applicable to any one of a vehicle, a controller or an electronic control unit disposed in the vehicle, or a server. The method includes: controlling a prompt apparatus to output first information, where the first information indicates a first use mode of a window; and controlling the window to perform a first operation corresponding to a second use mode.

In this embodiment of this application, after the prompt apparatus is controlled to output prompt information (that is, the first information) indicating the first use mode of the window, the window may be flexibly controlled to perform a corresponding operation. It may be understood that, in this embodiment of this application, the first use mode of the window is determined based on a use scenario of the window. Therefore, in this embodiment of this application, the window may be flexibly controlled based on the use scenario of the window, so that user experience and safety of using the vehicle by the user are improved.

In a possible implementation, the first use mode is the same as the second use mode; and before the controlling the window to perform a first operation corresponding to a second use mode, the method further includes: receiving a first instruction within first preset duration, where the first instruction indicates that a user confirms or approves use of the first use mode. In this implementation, only after the user confirms or approves use of the first use mode, the window is controlled to perform the first operation corresponding to the second use mode that is the same as the first use mode, so that control on the window meets a use requirement of the user. This can further improve user experience.

In a possible implementation, the first use mode is different from the second use mode; and before the controlling the window to perform a first operation corresponding to a second use mode, the method further includes: receiving a second instruction within first preset duration, where the second instruction indicates that a user does not approve use of the first use mode; and/or failing to receive a first instruction within the first preset duration, where the first instruction indicates that the user confirms or approves use of the first use mode. In this implementation, if the user does not confirm or does not approve use of the first use mode, the window is controlled to perform the first operation corresponding to the second use mode different from the first use mode. In this way, the window is controlled according to the user instruction, so that control on the window meets a use requirement of the user, and user experience can be effectively improved.

In a possible implementation, the method further includes: receiving a third instruction in a process of controlling the window to perform the first operation, where the third instruction indicates a third use mode different from the first use mode; and controlling the window to perform a second operation corresponding to the third use mode, where the second operation is different from the first operation. In this implementation, in a process of controlling the window to perform the first operation corresponding to the second use mode, the window may be controlled, based on user feedback information, to perform the second operation corresponding to the third use mode, so that flexible control on the window meets an actual requirement of the user.

In a possible implementation, the first use mode is a closing mode, the first information further indicates the user to close the window or indicates at least one of location information of a vehicle associated with the window, environment information of the vehicle, category information of a target object, or behavior information of the target object, and the target object is an interference object of the vehicle. In this implementation, when the first use mode is the closing mode, the first information output by the prompt apparatus may further indicate a plurality of types of information associated with the closing mode. In this way, the user can sense a use scenario of the window, so that the user determines a use mode of the window.

In a possible implementation, the second use mode is a closing mode; and the controlling the window to perform a first operation corresponding to a second use mode includes: controlling the window to be closed.

In a possible implementation, the closing mode includes level information; and the controlling the window to be closed includes: controlling, based on a closing speed corresponding to the level information, the window to be closed. It may be understood that, in this embodiment of this application, the level information may be represented by using an emergency level or a danger level of the window closing scenario associated with the window closing mode. The emergency level may be represented by using the environment information of the vehicle, and the danger level may be represented by using the category information of the target object. In this implementation, with reference to the level information of the window closing scenario, closing of the window is flexibly controlled, so that the vehicle can close the window in time in a dangerous window closing scenario. This effectively improves safety of using the vehicle by the user.

In a possible implementation, the closing mode is associated with at least one of the following window closing scenarios: The vehicle is located in a preset area; the environment information of the vehicle meets a preset condition; or a distance between the vehicle and the target object is less than a first preset value. In this embodiment of this application, the preset area includes but is not limited to any one of a highway tunnel, a wildlife park, or a road on which wildlife may appear. In this embodiment of this application, the environment information of the vehicle includes weather information and/or noise information. Correspondingly, the environment information of the vehicle meeting the preset condition includes but is not limited to weather at a location of the vehicle being poor weather (for example, rainy and snowy weather or sandstorm weather), and/or noise decibels at the location of the vehicle being greater than the fifth preset value. In this implementation, the closing mode may be associated with at least one window closing scenario. Therefore, in one or more window closing scenarios, closing of the window is flexibly controlled, so that user experience can be effectively improved.

It may be understood that, in this embodiment of this application, "the closing mode may be associated with at least one window closing scenario" may be understood as that in the at least one window closing scenario, the first use mode of the window may be set to the closing mode, so that closing of the window can be flexibly controlled based on the window closing scenario. This effectively improves user experience.

In a possible implementation, the vehicle corresponds to at least one first user, the target object corresponds to at least one second user, and there is no same user in the at least one first user and the at least one second user. In this embodiment of this application, "there is no same user in the at least one first user and the at least one second user" may be understood as that similarity between a user in the at least one second user and a user in the at least one first user is less than a preset threshold. In this implementation, wrongly identification of the target object can be effectively reduced, thereby improving user experience.

In a possible implementation, the second use mode is a closing mode, and the method further includes: controlling the window to perform a third operation corresponding to a fourth use mode, where the third operation is used to restore an opening/closing state of the window to a state that the window is in before the first operation is performed. For example, after the use scenario of the window is changed from the closing scenario to the opening scenario, a control device may control the window to be opened in time, and restore the opening/closing state of the window to an opening/closing state before the operation corresponding to the closing mode is performed on the window. In this implementation, when a use scenario of the window is safe, the opening/closing state of the window is controlled to be restored to the state that the window is in before the first operation is performed. This can effectively improve user experience.

In a possible implementation, the first use mode is an opening mode, and the first information further indicates the user to open the window or indicates at least one of location information of a vehicle associated with the window or environment information of the vehicle. In this implementation, when the first use mode is the opening mode, the first information output by the prompt apparatus may further indicate a plurality of types of information associated with the opening mode. In this way, the user can sense a use scenario of the window, so that the user determines a use mode of the window.

In a possible implementation, the second use mode is an opening mode; and the controlling the window to perform a first operation corresponding to a second use mode includes: controlling the window to be in a current opening/closing state if the window is in an incompletely closed state; or controlling the window to be opened if the window is in a completely closed state or an incompletely closed state. In this implementation, when the second use mode is the opening mode, the window is controlled to perform the first operation corresponding to the second use mode, and a plurality of implementations are provided to meet diversified window opening requirements of the user.

In a possible implementation, the controlling the window to be opened if the window is in a completely closed state or an incompletely closed state includes: controlling an opening/closing state of the window to restore to an opening/closing state that the window is in before being in the completely closed state or the incompletely closed state; or controlling an opening/closing state of the window to be a completely opened state. In this implementation, the opening/closing state of the window may be controlled to restore to the opening/closing state that the window is in before being in the completely closed state or the incompletely closed state, or the opening/closing state of the window may be controlled to be the completely opened state. In this way, control on the window complies with a use habit of the user. This effectively improves user experience.

In a possible implementation, the opening mode is associated with at least one of the following window opening scenarios: A temperature of the inside of the vehicle is greater than a second preset value; an oxygen level of the inside of the vehicle is less than a third preset value; there is a collision behavior of the vehicle; or a humidity value of the inside of the vehicle is greater than a fourth preset value. In this implementation, the opening mode may be associated with at least one window opening scenario. Therefore, in one or more window opening scenarios, opening of the window is flexibly controlled, so that user experience can be effectively improved.

It may be understood that, in this embodiment of this application, "the opening mode may be associated with at least one window opening scenario" may be understood as that in the at least one window opening scenario, the first use mode of the window may be set to the opening mode, so that opening of the window can be flexibly controlled based on the window opening scenario. This effectively improves user experience.

According to a second aspect, an embodiment of this application further provides a control apparatus. The apparatus may be configured to perform the method according to any one of the first aspect or the possible implementations of the first aspect.

For example, the apparatus includes:

a first processing module, configured to control a prompt apparatus to output first information, where the first information indicates a first use mode of a window; and
a second processing module, configured to control the window to perform a first operation corresponding to a second use mode.

In a possible implementation, the apparatus further includes a communication module, the first use mode is the same as the second use mode, and before the second processing module controls the window to perform the first operation corresponding to the second use mode, the communication module is configured to receive a first instruction within first preset duration, where the first instruction indicates that a user confirms or approves use of the first use mode.

In a possible implementation, the apparatus further includes a communication module, the first use mode is different from the second use mode, and before the second processing module controls the window to perform the first operation corresponding to the second use mode, the communication module is configured to receive a second instruction within first preset duration, where the second instruction indicates that a user does not approve use of the first use mode; and/or the first processing module is further configured to determine that the communication module does not receive a first instruction within the first preset duration, where the first instruction indicates that the user confirms or approves use of the first use mode.

In a possible implementation, the apparatus further includes a communication module; the communication module is configured to receive a third instruction in a process of controlling the window to perform the first operation, where the third instruction indicates a third use mode different from the first use mode; and the second processing module is further configured to control the window to perform a second operation corresponding to the third use mode, where the second operation is different from the first operation.

In a possible implementation, the first use mode is a closing mode, the first information further indicates the user to close the window or indicates at least one of location information of a vehicle associated with the window, environment information of the vehicle, category information of a target object, or behavior information of the target object, and the target object is an interference object of the vehicle.

In a possible implementation, the second use mode is a closing mode; and the second processing module is configured to control the window to perform the first operation corresponding to the second use mode, and is specifically configured to control the window to be closed.

In a possible implementation, the closing mode includes level information; and when the second processing module is configured to control the window to be closed, the second processing module is specifically configured to control, based on a closing speed corresponding to the level information, the window to be closed.

In a possible implementation, the closing mode is associated with at least one of the following window closing scenarios: The vehicle is located in a preset area; the environment information of the vehicle meets a preset condition; or a distance between the vehicle and the target object is less than a first preset value.

In a possible implementation, the vehicle corresponds to at least one first user, the target object corresponds to at least one second user, and there is no same user in the at least one first user and the at least one second user.

In a possible implementation, the second use mode is a closing mode; and the second processing module is further configured to control the window to perform a third operation corresponding to a fourth use mode, where the third operation is used to restore an opening/closing state of the window to a state that the window is in before the first operation is performed.

In a possible implementation, the first use mode is an opening mode, and the first information further indicates the user to open the window or indicates at least one of location information of a vehicle associated with the window or environment information of the vehicle.

In a possible implementation, the second use mode is an opening mode; and the second processing module is configured to control the window to perform the first operation corresponding to the second use mode, and is specifically configured to: control the window to be in a current opening/closing state if the window is in an incompletely closed state; or control the window to be opened if the window is in a completely closed state or an incompletely closed state.

In a possible implementation, if the window is in the completely closed state or the incompletely closed state, the second processing module is configured to control the window to be opened, and is specifically configured to: control an opening/closing state of the window to restore to an opening/closing state that the window is in before being in the completely closed state or the incompletely closed state; or control an opening/closing state of the window to be a completely opened state.

In a possible implementation, the opening mode is associated with at least one of the following window opening scenarios: A temperature value of the inside of the vehicle is greater than a second preset value; an oxygen level of the inside of the vehicle is less than a third preset value; there is a collision behavior of the vehicle; or a humidity value of the inside of the vehicle is greater than a fourth preset value.

According to a third aspect, an embodiment of this application provides a control apparatus, including a processor, a transceiver, and a memory. The processor is connected to the memory. The memory stores a computer program. When the computer program stored in the memory is executed by the processor, the control apparatus is enabled to implement the method according to any one of the first aspect or the possible implementations of the first aspect.

According to a fourth aspect, an embodiment of this application provides a control system. The system includes the apparatus according to any one of the second aspect or the possible implementations of the second aspect.

Optionally, the system further includes a prompt apparatus. The prompt apparatus is configured to output first information, where the first information indicates a first use mode of a window.

According to a fifth aspect, an embodiment of this application provides a terminal device. The terminal device is configured to implement the apparatus according to any one of the second aspect or the possible implementations of the second aspect. The terminal in this embodiment of this application may be, for example, a vehicle or another apparatus in the vehicle. The another apparatus includes but is not limited to a vehicle-mounted terminal, a vehicle-mounted controller, a vehicle-mounted module, a vehicle-mounted assembly, a vehicle-mounted component, a vehicle-mounted chip, a vehicle-mounted unit, or another sensor like a vehicle-mounted radar or a vehicle-mounted camera. The vehicle may use the vehicle-mounted terminal, the vehicle-mounted controller, the vehicle-mounted module, the vehicle-mounted assembly, the vehicle-mounted component, the vehicle-mounted chip, the vehicle-mounted unit, the vehicle-mounted radar, or the vehicle-mounted camera to implement the control method provided in embodiments of this application. The terminal may be another smart terminal other than the vehicle, or a component disposed in another smart terminal other than the vehicle. The smart terminal may be a smart transportation device, a smart home device, a robot, and the like, for example, including but not limited to a smart terminal or a controller in a smart terminal, a chip, another sensor like a radar or a camera, another component, or the like.

According to a sixth aspect, this application provides a chip. The chip may include a processor and an interface. The processor is configured to read instructions through the interface, to perform the method according to any one of the first aspect or the possible implementations of the first aspect.

According to a seventh aspect, this application provides a computer-readable storage medium. The computer-readable storage medium stores a computer program. When the computer program is run, the method according to any one of the first aspect or the possible implementations of the first aspect is implemented.

According to an eighth aspect, this application provides a computer program product. When the computer program product runs on a processor, the method according to any one of the first aspect or the possible implementations of the first aspect is implemented.

For beneficial effects of the second aspect to the eighth aspect, refer to technical effects corresponding to the first aspect. Details are not described herein again.

## BRIEF DESCRIPTION OF DRAWINGS

FIG. 1 is an example diagram of an architecture of a possible control system according to an embodiment of this application;

FIG. 2A is an example diagram of sensor configuration of a vehicle to which an embodiment of this application is applicable;

FIG. 2B is an example diagram of an architecture of another control system according to an embodiment of this application;

FIG. 3 is an example schematic flowchart of a control method according to an embodiment of this application;

FIG. 4 is a diagram 1 of interfaces of a control apparatus according to an embodiment of this application;

FIG. 5A is a diagram 2 of an interface of a control apparatus according to an embodiment of this application;

FIG. 5B is a diagram 3 of an interface of a control apparatus according to an embodiment of this application;

FIG. 5C is a diagram 4 of an interface of a control apparatus according to an embodiment of this application;

FIG. 5D is a diagram 5 of an interface of a control apparatus according to an embodiment of this application;

FIG. 5E is a diagram 6 of an interface of a control apparatus according to an embodiment of this application;

FIG. 5F is a diagram 7 of an interface of a control apparatus according to an embodiment of this application;

FIG. 5G is a diagram 8 of an interface of a control apparatus according to an embodiment of this application;

FIG. 5H is a diagram 9 of an interface of a control apparatus according to an embodiment of this application;

FIG. 5I is a diagram 10 of an interface of a control apparatus according to an embodiment of this application;

FIG. 6 is an example schematic flowchart of identifying a use scenario of a window according to an embodiment of this application;

FIG. 7 is a diagram of a structure of a control apparatus according to an embodiment of this application; and

FIG. 8 is a diagram of a structure of a chip system according to an embodiment of this application.

## DESCRIPTION OF EMBODIMENTS

The following describes in detail embodiments of this application with reference to accompanying drawings.

This application provides a control method, a control apparatus, and a system, to implement flexible control on a smart device and improve user experience and safety of using the smart device. The method and the apparatus are based on a same technical idea. Because a problem-resolving principle of the method is similar to that of the apparatus, mutual reference may be made to implementations of the apparatus and the method. Repeated parts are not described in detail.

Some terms in embodiments of this application are first described to facilitate understanding of a person skilled in the art.

(1) An interference object may be understood as an object that is near a vehicle and that affects safety of a user in the vehicle or an object that causes interference to normal driving of the vehicle. In this case, in this embodiment of this application, the interference object may include a danger target and an interference target. The danger target is an object that is near the vehicle and that affects safety of the user in the vehicle. The danger target may include but is not limited to a beast and a vicious person. The beast may be, for example, at least one of a tiger, a lion, or a large dog. The vicious person may be, for example, a person holding a knife/gun or a masked person. The interference target is an object that is near the vehicle and that causes interference to normal driving of the vehicle. The interference target may include, for example, a sprinkler and/or a dump truck on an adjacent lane. Correspondingly, in this embodiment of this application, the target object may include a danger target and an interference target.

(2) A window closing scenario may be understood as a scenario in which a window of a vehicle needs to be controlled to be closed when the vehicle may be affected by an external factor, so as to avoid interference caused by the external factor to the vehicle. The external factor may be, for example, at least one of weather information, noise information, an interference object, or location information.

(3) A window opening scenario may be understood as a scenario in which a window of a vehicle needs to be controlled to be opened when the vehicle may be affected by an internal factor or the vehicle is free from interference caused by an external factor to the vehicle. The internal factor may be, for example, at least one of temperature information, humidity information, or oxygen information of the inside of the vehicle.

(4) A first use mode may be understood as a use mode of a window, including an opening mode and a closing mode. The first use mode corresponds to a use scenario of the window. Correspondingly, when the first use mode is the closing mode, a use scenario corresponding to the closing mode is a window closing scenario; and when the first use mode is the opening mode, a use scenario corresponding to the opening mode is a window opening scenario.

(5) A second use mode is a use mode that is the same as or different from the first use mode. For example, when the first use mode and the second use mode are the same, both the first use mode and the second use mode may be a closing mode of forbidding an anti-clamping function of a window. For another example, when the first use mode is different from the second use mode, the first use mode may be the closing mode of forbidding the anti-clamping function of the window, and the second use mode is a closing mode of activating the anti-clamping function of the window. For another example, when the first use mode is different from the second use mode, the first use mode may be an opening mode of controlling the window to be completely opened, and the second use mode may be an opening mode of controlling the window to keep a current opening/closing state.

(6) A use scenario of a third use mode is the same as that of the first use mode, but an operation performed by a window in the first use mode is different from that performed by the window in the third use mode.

(7) In embodiments of this application, "at least one" means one or more, and "at least two" means two or more. The term "and/or" describes an association relationship between associated objects and represents that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one (piece) of a, b, and c may represent: a, b, c, a and b, a and c, b and c, or a, b, and c, where a, b, and c may be singular or plural. In addition, it should be understood that in descriptions of this application, terms such as "first" and "second" are merely used for distinguishing and description, but should not be understood as an indication or implication of relative importance, and are not intended to limit a sequence.

With reference to the accompanying drawings, the following describes a system architecture to which embodiments of this application are applicable.

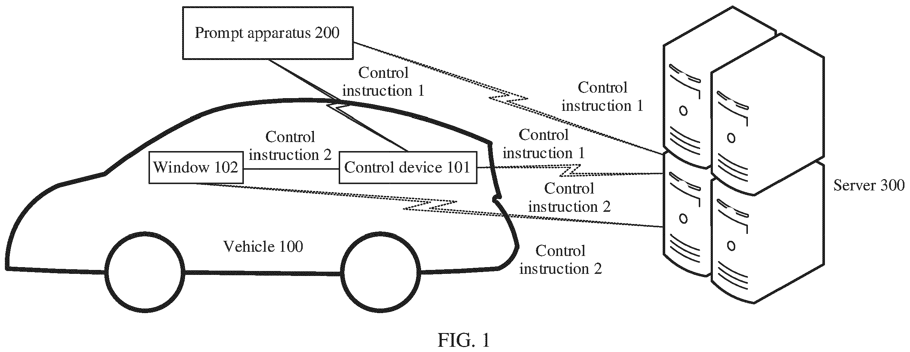

FIG. 1 shows a system architecture to which an embodiment of this application is applicable. The system includes a vehicle 100 and a prompt apparatus 200. The vehicle 100 includes a control device 101 and a window 102.

The prompt apparatus 200 refers to an apparatus configured to output prompt information, and includes but is not limited to at least one of a voice apparatus, an optoelectronic apparatus, or a display apparatus. For example, the prompt apparatus 200 may be, for example, at least one of a tablet computer, a notebook computer, a palmtop computer, a desktop computer, a headset, an acoustic device, a wearable device (for example, a smartwatch, a smart band, or a pedometer), a virtual reality (virtual reality, VR) device, or a mobile phone. Correspondingly, the "prompt information" output by the prompt apparatus 200 may be at least one of voice information, text information, or picture information.

In some other embodiments, the prompt apparatus 200 may be a vehicle-mounted component disposed in the vehicle 100. For example, the prompt apparatus 200 may be, for example, at least one of a vehicle-mounted sound box, a vehicle-mounted display, or a vehicle-mounted indicator.

The control device 101 may be any one of a vehicle domain controller, a body domain controller, an electronic control unit (electronic control unit, ECU) of a window 102, or a vehicle-mounted terminal. In some possible embodiments, if the control device 101 is the ECU of the window 102, the control device 101 may communicate and interact with the body domain controller or the vehicle domain controller, receive a control instruction used to control the window 102, and control the window 102 to perform a corresponding operation.

Optionally, the foregoing system may further include a server 300. The server 300 may communicate and interact with the window 102 and the prompt apparatus 200, and directly control the window 102 and the prompt apparatus 200 to perform corresponding operations. Alternatively, the server 300 may communicate and interact with the control device 101, to indirectly control, by using the control device 101, the window 102 and the prompt apparatus 200 to perform corresponding operations.

In conclusion, there are a plurality of cases in which the control device 101 controls the window 102 and the prompt apparatus 200 to perform corresponding operations, including but not limited to the following cases.

Case 1: The control device 101 sends a control instruction 1 to the prompt apparatus 200, so that the prompt apparatus 200 outputs first information, where the first information may indicate the first use mode of the window 102. The control device 101 may send a control instruction 2 to the window 102, so that the window 102 is controlled to perform a first operation corresponding to the second use mode.

Case 2: The server 300 sends a control instruction 1 to the prompt apparatus 200, so that the prompt apparatus 200 outputs first information, where the first information may indicate the first use mode of the window 102. The server 300 may send a control instruction 2 to the window 102, so that the window 102 is controlled to perform a first operation corresponding to the second use mode.

Case 3: The server 300 sends a control instruction 1 to the control device 101, and then the control device 101 may send the control instruction 1 to the prompt apparatus 200, so that the prompt apparatus 200 outputs first information, where the first information may indicate the first use mode of the window 102. The server 300 sends a control instruction 2 to the control device 101, and then the control device 101 may send the control instruction 2 to the window 102, so that the window 102 is controlled to perform a first operation corresponding to the second use mode.

In case 1 to case 3, the window 102 is controlled to perform the first operation corresponding to the second use mode, so that the window can be flexibly controlled, thereby effectively improving user experience and safety of using the vehicle by the user.

It should be understood that, the architecture shown in FIG. 1 may be applied to a plurality of communication scenarios, for example, the 5th generation (the 5th generation, 5G) communication system, a future 6th generation communication system and another evolved communication system, a long term evolution (long term evolution, LTE) communication system, vehicle to everything (vehicle to everything, V2X), LTE-vehicle (LTE-vehicle, LTE-V), vehicle to vehicle (vehicle to vehicle, V2V), internet of vehicles, machine type communications (machine type communications, MTC), internet of things (internet of things, IoT), long term evolution-machine to machine (LTE-machine to machine, LTE-M), and machine to machine (machine to machine, M2M). This is not limited in this application.

It should be noted that the use mode of the window 102 is determined based on a use scenario of the window 102. In embodiments of this application, there are a plurality of implementations in which the vehicle 100 determines a use scenario of the window 102, including but not limited to the following implementations.

Implementation 1: The vehicle 100 may analyze information about the vehicle 100 and/or information about a target object, to identify a use scenario of the window 102. The information about the vehicle 100 may include at least one of location information (for example, information about a semantic location or longitude and latitude), behavior information (for example, a collision behavior), or information about an environment (including an environment inside of the vehicle (for example, temperature information, oxygen information, or humidity information) and an environment outside of the vehicle (for example, weather information or noise information)) of the vehicle 100. The information about the target object may include location information (for example, information about a semantic location or longitude and latitude) of the target object, category information (for example, a type of a wild animal, a vicious person, or a work vehicle) of the target object, or behavior information (for example, approaching the vehicle 100 or moving away from the vehicle 100) of the target object. The target object is an interference object of the vehicle 100.

It can be learned from the foregoing descriptions that, in embodiments of this application, the target object may include the danger target and the interference target. The danger target is an object that affects safety of the user in the vehicle. The danger target may include but is not limited to a beast and a vicious person. The beast may be, for example, at least one of a tiger, a lion, or a large dog. The vicious person may be, for example, a person holding a knife/gun or a masked person. The interference target is an object that causes interference to normal driving of the vehicle 100. The interference target includes but is not limited to a sprinkler and/or a dump truck on an adjacent lane of the vehicle 100.

It should be noted that, in this embodiment of this application, the vehicle 100 may obtain the information about the vehicle 100 and/or the information about the target object by using a sensor disposed on the vehicle 100, or the vehicle 100 may obtain the information about the vehicle 100 and/or the information about the target object by using a roadside device. This is not specifically limited in this embodiment of this application.

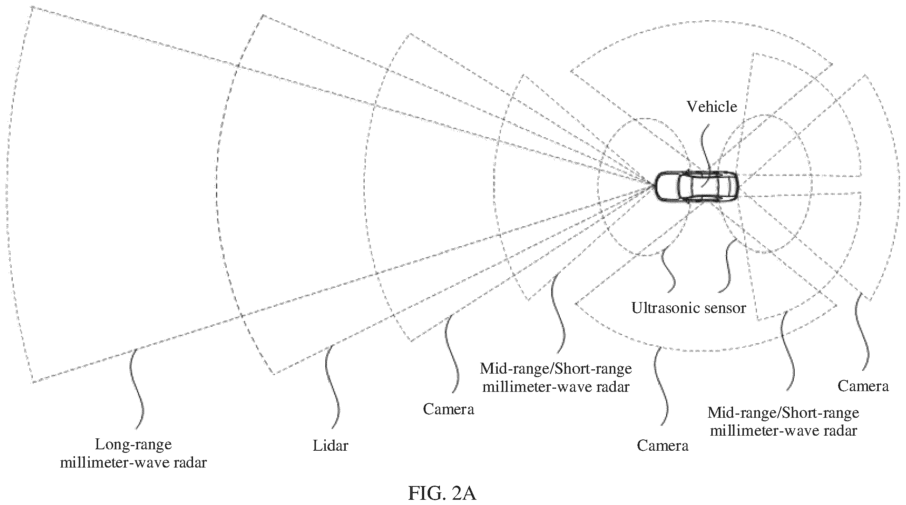

Example 1: The vehicle 100 may obtain the information about the vehicle 100 and/or the information about the target object by using a sensor disposed on the vehicle 100. Refer to FIG. 2A. FIG. 2A is a diagram of sensor configuration of the vehicle 100. As shown in FIG. 2A, sensors configured in the vehicle 100 include an ultrasonic sensor, a millimeter-wave radar (including a mid-range/short-range millimeter-wave radar and a long-range millimeter-wave radar), a camera, and a lidar.

The ultrasonic sensor may also be referred to as an ultrasonic radar, and is a sensing apparatus that uses ultrasonic wave detection. A working principle of the ultrasonic sensor is as follows. An ultrasonic wave is transmitted outward by using an ultrasonic wave transmit apparatus. An ultrasonic wave reflected by an obstacle is received by using a receiving apparatus. A distance between the obstacle and the vehicle 100 is calculated based on a time difference of reflecting and receiving the ultrasonic wave. In this way, the vehicle 100 may obtain the information about the distance between the target object and the vehicle 100 by using the ultrasonic sensor.

A millimeter-wave radar uses a millimeter wave as a detection medium, and can measure a distance between the millimeter-wave radar and a measured object, an angle, or a relative velocity. According to detection distances, millimeter-wave radars can be classified into a long-range radar (long-range radar, LRR), a mid-range radar (mid-range radar, MRR), and a short-range radar (short-range radar, SRR). The LRR is mainly used in scenarios such as adaptive cruise and brake assistance. The LRR does not have a high requirement on an angular domain width of detection, which means that in terms of an antenna, there is a low requirement on a 3 dB beamwidth of the antenna. The MRR/SRR is mainly used in scenarios such as automatic parking, lane change assist, and blind spot detection. The MRR/SRR has a high requirement on the angular domain width of detection, which means that in terms of an antenna, there is a high requirement on a 3 dB beamwidth of the antenna, and a sidelobe level of the antenna needs to be low. A beamwidth is used to ensure a detection angular domain range. A low sidelobe is used to reduce a clutter energy reflected by the ground, reduce a false alarm probability, and ensure driving safety. The LRR may be installed in the front of the vehicle, and the MRR/SRR may be installed at four corners of the vehicle. The LRR and the MRR/SRR may be used together to implement 360° detection of the vehicle. The millimeter-wave radar may include a housing. The housing is equipped with at least one built-in printed circuit board (printed circuit board, PCB) like a power supply PCB and a radar PCB. The power supply PCB may provide a voltage for internal use of the radar, and may also provide an interface for communication with another device and a safety function. The radar PCB may provide receiving, sending, and processing of a millimeter-wave signal, and a component used for millimeter-wave signal processing, and an antenna (a transmit antenna Tx and a receive antenna Rx) used for receiving and sending a millimeter-wave signal are integrated on the radar PCB. The antenna may be formed on the back of the radar PCB in a form of a microstrip array, and is used to transmit and receive millimeter waves. Similarly, the vehicle 100 may obtain information about a distance between the target object and the vehicle 100 by using a millimeter-wave radar.

The lidar is short for a light detection and ranging (light detection and ranging, LiDAR) system. It mainly includes a transmitter, a receiver, and a signal processing unit. The transmitter is a laser emitting mechanism in the lidar. After a laser emitted by the transmitter is irradiated to the target object, the laser is reflected by the target object, and reflected light is converged to the receiver through a lens group. The signal processing unit is responsible for controlling transmission of the transmitter, processing a signal received by the receiver, and calculating information such as a position, a speed, a distance, and/or a size of the target object. In this way, the vehicle 100 may obtain at least one of the information about the distance between the target object and the vehicle 100, the location information of the target object, the category information of the target object, or the behavior information of the target object by using the lidar.

The camera may be configured to obtain image information of an environment in which the vehicle is located. Currently, a plurality of cameras may be installed on the vehicle to obtain information from more angles. The camera in embodiments of this application may have at least one function of image collection, image processing, or target recognition. Therefore, the vehicle 100 may obtain the category information of the target object with the camera.

Optionally, a sound sensor may be further disposed in the vehicle 100. The sound sensor may have a function of sound collection, sound identification, and the like. Therefore, the vehicle 100 may collect noise information around the vehicle with a sound sensor.

Optionally, the vehicle 100 may further obtain the location information and/or weather information of the vehicle 100 with a navigation map module disposed in the vehicle 100.

Optionally, the vehicle 100 may further obtain the behavior information of the vehicle 100 with a vibration sensor disposed in the vehicle 100. For example, whether there is a collision behavior of the vehicle 100 may be detected with a vibration sensor.

It should be understood that the sensors are merely example sensors that may be configured in the vehicle in embodiments of this application, and are not limitations. In another embodiment, the sensor configured on the vehicle may include but is not limited to the foregoing examples.

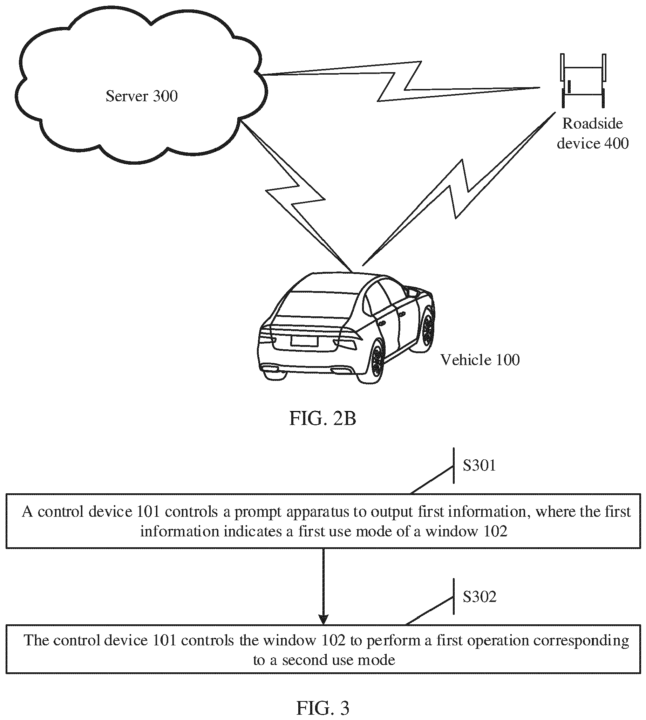

Example 2: The vehicle 100 may obtain the information about the vehicle 100 and/or the information about the target object by using the roadside device. Refer to FIG. 2B. FIG. 2B is a diagram of another system architecture according to an embodiment of this application. The system includes the vehicle 100 and a roadside device 400. The roadside device 400 is provided with at least one of a radar, a camera, or a sound sensor. The roadside device 400 may collect the information about the vehicle 100 and/or the information about the target object, and send the information about the vehicle 100 and/or the information about the target object to the vehicle 100.

In Implementation 1, the vehicle 100 analyzes the information about the vehicle 100 and/or the information about the target object, to identify the use scenario of the window 102, so that a determined use scenario of the window 102 is more accurate.

Implementation 2: The vehicle 100 may receive indication information from the roadside device or a server associated with the vehicle 100. The indication information may indicate the use scenario of the window 102.

Still refer to FIG. 2B. Optionally, the system in FIG. 2B may further include a server 300, and the server 300 is the server associated with the vehicle 100. In a possible implementation, the roadside device 400 may analyze and process the information about the vehicle 100 and/or the information about the target object, identify the use scenario of the window 102, and send the indication information to the vehicle 100. The indication information may indicate the use scenario of the window 102. In this way, the vehicle 100 may determine the use scenario of the window 102 after receiving the indication information. In another possible implementation, the server 300 may analyze and process the information about the vehicle 100 and/or the information about the target object, identify the use scenario of the window 102, and send the indication information to the vehicle 100. The indication information may indicate the use scenario of the window 102. In this way, the vehicle 100 may determine the use scenario of the window 102 after receiving the indication information.

In Implementation 2, the vehicle 100 determines the use scenario of the window 102 by receiving the indication information from the roadside device or the server associated with the vehicle 100, so that a calculation amount of the vehicle 100 can be effectively reduced.

The following describes a control method provided in embodiments of this application with reference to specific accompanying drawings.

FIG. 3 is a schematic flowchart of a control method according to an embodiment of this application. The method may be applied to the system architecture shown in FIG. 1. The method includes the following steps.

S301: A control device 101 controls a prompt apparatus to output first information, where the first information indicates a first use mode of a window 102.

In this embodiment of this application, the prompt apparatus refers to an apparatus configured to output prompt information, and may include but is not limited to at least one of a voice apparatus, an optoelectronic apparatus, or a display apparatus. Correspondingly, the "first information" output by the prompt apparatus may be at least one of voice information, text information, or picture information.

The prompt apparatus is a device that may be disposed outside a vehicle 100 associated with the window 102, or the prompt apparatus is a vehicle-mounted component that may be disposed inside a vehicle 100 associated with the window 102, or the prompt apparatus may include a device that is disposed outside a vehicle 100 associated with the window 102 and a vehicle-mounted component that is disposed inside the vehicle 100 associated with the window 102. This is not specifically limited in embodiments of this application.

Example 1: If the prompt apparatus is a vehicle-mounted component disposed inside the vehicle 100, the prompt apparatus may be, for example, at least one of a vehicle-mounted sound box, a vehicle-mounted display, or a vehicle-mounted indicator.

Example 2: If the prompt apparatus is a device disposed outside the vehicle 100, the prompt apparatus may be, for example, at least one of a tablet computer, a notebook computer, a palmtop computer, a desktop computer, a headset, an acoustic device, a wearable device (like a smartwatch, a smart band, or a pedometer), or a mobile phone.

Example 3: The prompt apparatus includes a device that is disposed outside the vehicle 100 associated with the window 102, and a vehicle-mounted component that is disposed inside the vehicle 100 associated with the window 102. In this case, the prompt apparatus may be, for example, a mobile phone and a vehicle-mounted display.

In embodiments of this application, the control device 101 may be any one of a vehicle domain controller, a body domain controller, an ECU of the window 102, or a vehicle-mounted terminal. For example, the vehicle-mounted terminal may be a telematics box (telematics box, T-BOX). In some possible embodiments, when the control device 101 is the ECU of the window 102, the control device 101 may communicate and interact with the body domain controller or the vehicle domain controller, obtain a control instruction for the window 102, and control the window 102 to perform a corresponding operation according to the control instruction.

In this embodiment of this application, the first use mode of the window 102 includes an opening mode or a closing mode of the window 102. Correspondingly, when the first use mode is the closing mode, the first information may indicate the closing mode of the window 102; or when the first use mode is the opening mode, the first information may indicate the opening mode of the window 102.

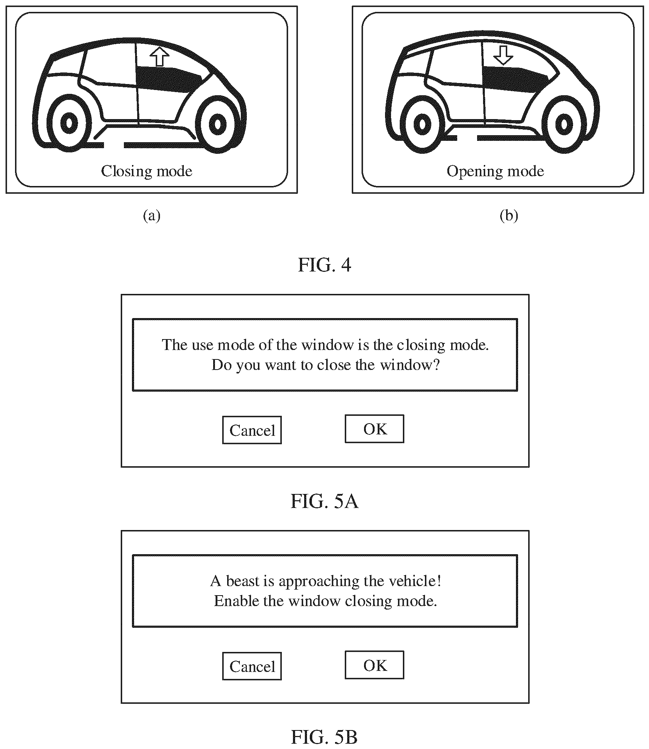

Example 1: For example, the control device 101 is the vehicle domain controller, the first information is an icon and a text, and the prompt apparatus is a vehicle-mounted display. Refer to FIG. 4. FIG. 4 is a diagram 1 of interfaces of the prompt apparatus according to an embodiment of this application. When the first use mode is the closing mode, the vehicle domain controller may control the vehicle-mounted display to display an icon and a text "Closing mode" (that is, the first information) shown in (a) in FIG. 4. Similarly, when the first use mode is the opening mode, the vehicle domain controller may control the vehicle-mounted display to display an icon and a text "Opening mode" (that is, the first information) shown in (b) in FIG. 4.

Example 2: For example, the control device 101 is a body domain controller, the prompt apparatus is a vehicle-mounted indicator, and the first information is light information. When the first use mode is the closing mode, the body domain controller may control the vehicle-mounted indicator to show red light, where the red light indicates that the first use mode of the window 102 is the closing mode. When the first use mode is the opening mode, the body domain controller may control the vehicle-mounted indicator to show green light, where the green light indicates that the first use mode of the window 102 is the opening mode.

Example 3: For example, the control device 101 is the body domain controller, the prompt apparatus is a vehicle-mounted sound box, and the first information is voice prompt information. When the first use mode is the closing mode, the vehicle domain controller may control the vehicle-mounted sound box to output voice prompt information "The current use mode of the window 102 is the closing mode!" When the first use mode is the opening mode, the body domain controller may control the vehicle-mounted sound box to output voice prompt information "The current use mode of the window 102 is the opening mode!"

It may be understood that the first information may be one or more pieces of information. This is not specifically limited in embodiments of this application. Therefore, in addition to indicating the first use mode of the window, the first information may further indicate other information.

Implementation 1: The first use mode is the closing mode, and the first information may further indicate the user to close the window or indicate at least one of the location information of the vehicle to which the window belongs, the environment information of the vehicle, the category information of the target object, or the behavior information of the target object. In this way, the user can sense a current window closing scenario of the window, so that the user makes a corresponding window closing decision.

Example 1: Refer to FIG. 5A. FIG. 5A is a diagram 2 of an interface of the prompt apparatus according to an embodiment of this application. The first information displayed on the interface includes prompt information "The use mode of the window is the closing mode. Do you want to close the window?" and includes an "OK" button and a "Cancel" button that are used by the user to determine whether to close the window.

Example 2: Refer to FIG. 5B. FIG. 5B is a diagram 3 of an interface of the prompt apparatus according to an embodiment of this application. The first information displayed on the interface includes prompt information "A beast is approaching the vehicle! Enable the window closing mode." and includes an "OK" button and a "Cancel" button that are used by the user to determine whether to close the window.

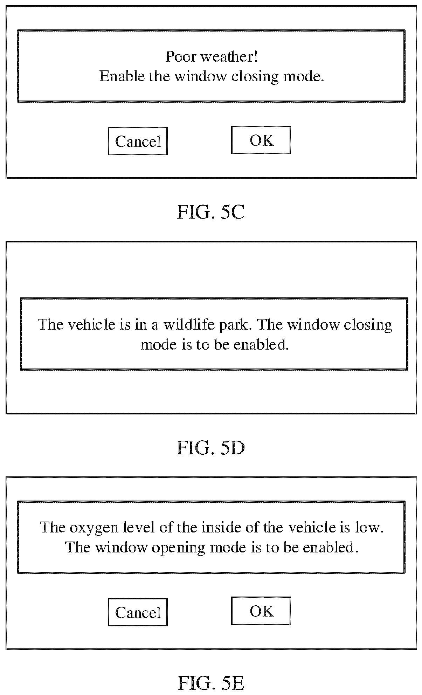

Example 3: Refer to FIG. 5C. FIG. 5C is a diagram 4 of an interface of the prompt apparatus according to an embodiment of this application. The first information displayed on the interface includes prompt information "Poor weather! Enable the window closing mode." and includes an "OK" button and a "Cancel" button that are used by the user to determine whether to close the window.

Example 4: Refer to FIG. 5D. FIG. 5D is a diagram 5 of an interface of the prompt apparatus according to an embodiment of this application. The first information displayed on the interface includes prompt information "The vehicle is in a wildlife park. The window closing mode is to be enabled."

Implementation 2: The first use mode is the opening mode, and the first information may further indicate the user to open the window or indicate at least one of the location information of the vehicle to which the window belongs or the environment information of the vehicle.

Example 1: Refer to FIG. 5E. FIG. 5E is a diagram 6 of an interface of the prompt apparatus according to an embodiment of this application. The first information displayed on the interface includes prompt information "The oxygen level of the inside of the vehicle is low. The window opening mode is to be enabled." and includes an "OK" button and a "Cancel" button that are used by the user to determine to open the window.

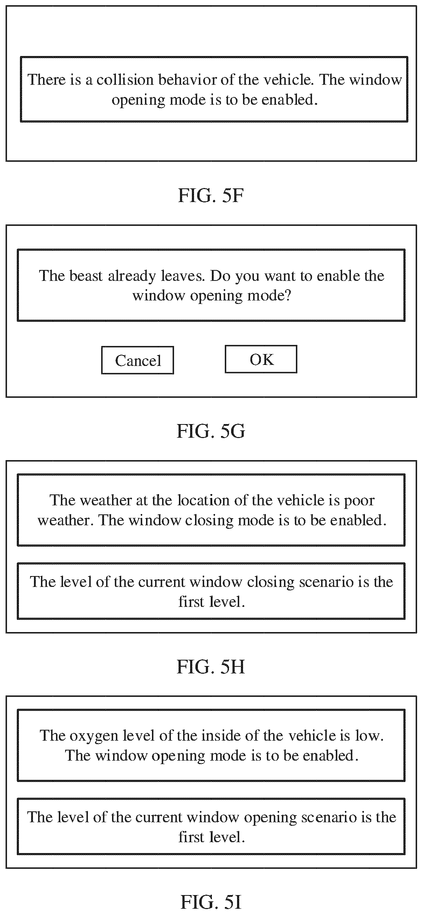

Example 2: Refer to FIG. 5F. FIG. 5F is a diagram 7 of an interface of the prompt apparatus according to an embodiment of this application. The first information displayed on the interface includes prompt information "There is a collision behavior of the vehicle. The window opening mode is to be enabled."

Example 3: Refer to FIG. 5G. FIG. 5G is a diagram 8 of an interface of the prompt apparatus according to an embodiment of this application. The first information displayed on the interface includes prompt information "The beast already leaves. Do you want to enable the window opening mode?" and includes an "OK" button and a "Cancel" button that are used by the user to decide.

It may be understood that the environment information of the vehicle includes the information about the environment inside the vehicle and the information about the environment outside the vehicle. The information about the environment inside the vehicle may be, for example, at least one of temperature information, humidity information, or oxygen information of the inside of the vehicle, and the information about the environment outside the vehicle may be, for example, weather information or noise information. In some possible embodiments, the environment information of the vehicle may be used to represent level information of a use scenario of the window. Therefore, the first information may further indicate the level information that is of the use scenario of the window and that corresponds to the environment information of the vehicle.

Example 1: For example, the first use mode is the closing mode, and a use scenario of the window corresponding to the closing mode is a window closing scenario. For example, the information about the environment outside the vehicle is the environment information of the vehicle. The information about the environment outside the vehicle includes the weather information and the noise information. The weather information indicates that weather at a location of the vehicle is poor weather. The noise information indicates that noise decibels at the location of the vehicle are greater than or equal to a fifth preset value. The weather at the location of the vehicle is poor weather, and the window closing scenario corresponding to the closing mode is at a first level. The noise decibels at the location of the vehicle are greater than or equal to the fifth preset value, and the window closing scenario corresponding to the closing mode is at a second level. Refer to FIG. 5H. FIG. 5H is a diagram 9 of an interface of the prompt apparatus according to an embodiment of this application. The first information displayed on the interface includes prompt information "The weather at the location of the vehicle is poor weather. The window closing mode is to be enabled" and level information of the use scenario of the window "The level of the current window closing scenario is the first level."

Example 2: For example, the first use mode is the opening mode, and a use scenario of the window corresponding to the opening mode is a window opening scenario. For example, the information about the environment inside the vehicle is the environment information of the vehicle. The information about the environment inside the vehicle includes the oxygen information and the humidity information. The oxygen information indicates that an oxygen level of the inside of the vehicle is less than a third preset value. The humidity information indicates that humidity of the inside of the vehicle is greater than or equal to a fourth preset value. The oxygen level of the inside of the vehicle is less than the third preset value, and the window opening scenario corresponding to the opening mode is at the first level. The humidity of the inside of the vehicle is greater than or equal to the fourth preset value, and the window opening scenario corresponding to the opening mode is at the second level. Refer to FIG. 5I. FIG. 5I is a diagram 10 of an interface of the prompt apparatus according to an embodiment of this application. The first information displayed on the interface includes prompt information "The oxygen level of the inside of the vehicle is low. The window opening mode is to be enabled." and level information of the use scenario of the window "The level of the current window opening scenario is the first level."

S302: The control device 101 controls the window 102 to perform a first operation corresponding to a second use mode.

It can be learned from the foregoing descriptions that, in this embodiment of this application, the first use mode of the window 102 includes the opening mode or the closing mode of the window 102. It should be noted that, in this embodiment of this application, the second use mode may be the same as or different from the first use mode. The following provides descriptions of different cases.

Case 1: The first use mode is the same as the second use mode. Before controlling the window 102 to perform the first operation corresponding to the second use mode, the control device 101 needs to receive a first instruction within first preset duration, where the first instruction indicates that the user confirms or approves use of the first use mode. The control device 101 controls the window 102 to perform the first operation corresponding to the second use mode the same as the first use mode.

In an example, the first use mode is the closing mode, and if the second use mode is the same as the first use mode, the second use mode is the closing mode. Optionally, both the second use mode and the first use mode are a closing mode of forbidding an anti-clamping function of the window 102.

In another example, the first use mode is the opening mode, and if the second use mode is the same as the first use mode, the second use mode is the opening mode.

In the foregoing Case 1, only after the user confirms or approves use of the first use mode, the window 102 is controlled to perform the first operation corresponding to the second use mode that is the same as the first use mode, so that control on the window 102 meets a use requirement of the user. This further improves user experience.

Case 2: The first use mode is different from the second use mode. Before the control device 101 controls the window 102 to perform the first operation corresponding to the second use mode, if a second instruction is received within the first preset duration, and the second instruction indicates that the user does not approve use of the first use mode, and/or if a first instruction is not received within the first preset duration, and the first instruction indicates that the user confirms or approves use of the first use mode, the control device 101 controls the window 102 to perform the first operation corresponding to the second use mode different from the first use mode.

In an example, the first use mode is the closing mode of forbidding an anti-clamping function of the window 102, and the second use mode is different from the first use mode. In this case, the second use mode is a closing mode of activating the anti-clamping function of the window 102.

In another example, the first use mode is an opening mode in which the window 102 is controlled to be completely opened, and the second use mode is different from the first use mode. In this case, the second use mode may be an opening mode in which the window 102 is controlled to keep a current opening/closing state.

It may be understood that, in Case 2, when the user does not confirm or does not approve use of the first use mode, the control device 101 controls the window 102 to perform the first operation corresponding to the second use mode that is different from the first use mode, so that control of the window 102 by the control device 101 better meets a user requirement. In addition, the control device 101 controls, only in an extreme case (for example, in a case in which there is noise information outside of the window but the user thinks that the window does not need to be closed), the window 102 to perform the first operation corresponding to the second use mode different from the first use mode.

In the embodiment shown in FIG. 3, after controlling the prompt apparatus to output the prompt information (that is, the first information) indicating a use mode of the window 102, the control device 101 may flexibly control the window 102 to perform an operation corresponding to the use mode. In this embodiment of this application, the use mode of the window 102 is determined based on a use scenario of the window 102. Therefore, in this embodiment of this application, the window 102 may be flexibly controlled based on a use scenario of the window 102, so that user experience and safety of using the vehicle by the user are improved.

In a possible implementation, in a process in which the control device 101 controls the window 102 to perform the first operation corresponding to the second use mode, the control device 101 may further receive a third instruction, where the third instruction indicates a third use mode different from the first use mode; and the control device 101 controls the window to perform a second operation corresponding to the third use mode. In this way, in a process of controlling the window to perform the first operation corresponding to the second use mode, the control device 101 may control, based on user feedback information, the window to perform the second operation corresponding to the third use mode, so that flexible control on the window meets an actual requirement of the user.

It should be noted that the first use mode is different from the third use mode, and correspondingly, the third use mode is also different from the second use mode.

Example 1: For example, the second use mode is the closing mode, and the third use mode is the opening mode. Correspondingly, the first operation corresponding to the second mode that the control device 101 controls the window 102 to perform is controlling the window 102 to be closed. Therefore, in a process of controlling the window 102 to be closed, if the control device 101 receives the third instruction, and the third instruction indicates the third use mode, the control device 101 may control the window 102 to be opened.

Example 2: For example, the second use mode is the opening mode, and the third use mode is the closing mode. Correspondingly, the first operation corresponding to the second mode that the control device 101 controls the window 102 to perform is controlling the window 102 to be opened. Therefore, in a process of controlling the window 102 to be opened, if the control device 101 receives the third instruction, and the third instruction indicates the third use mode, the control device 101 may control the window 102 to be closed.

It can be learned from the foregoing descriptions that, in this embodiment of this application, the first use mode of the window 102 includes the closing mode and the opening mode. Correspondingly, the use scenario of the window 102 includes a window closing scenario and a window opening scenario. When the first use mode is the closing mode, a use scenario of the window corresponding to the closing mode is the window closing scenario; and when the first use mode is the opening mode, a use scenario of the window corresponding to the opening mode is a window opening scenario. The window closing scenario refers to a scenario in which the window 102 needs to be controlled to be closed when the vehicle 100 may be affected by an external factor, so as to avoid interference caused by the external factor to the vehicle 100. The window opening scenario refers to a scenario in which the window 102 needs to be controlled to be opened when the vehicle 100 may be affected by an internal factor or the vehicle 100 is free from interference caused by an external factor.

The following separately describes the window closing scenario and the window opening scenario.

1. Window closing scenario

In this embodiment of this application, there are a plurality of window closing scenarios corresponding to the closing mode, including but not limited to the following scenarios.

1. The vehicle is located in a preset area.

It may be understood that the preset area includes but is not limited to any one of a highway tunnel, a wildlife park, or a road on which wildlife may appear.

In a possible implementation, a navigation map module is disposed in the vehicle 100. The vehicle 100 may obtain a semantic location of the vehicle 100 by using the navigation map module. If the semantic location indicates that the vehicle 100 is in a preset area, it is determined that the use scenario of the window 102 is the closing scenario.

2. The environment information of the vehicle meets a preset condition.

The information about the environment outside the vehicle is used as an example of the environment information of the vehicle herein, and the information about the environment outside the vehicle includes but is not limited to weather information and/or noise information. Correspondingly, the environment information of the vehicle meeting the preset condition includes the weather at the location of the vehicle being poor weather (for example, rainy and snowy weather or sandstorm weather), and/or the noise decibels at the location of the vehicle being greater than or equal to the fifth preset value.

In a possible implementation, when the noise information indicates that the noise decibels around the vehicle 100 are greater than or equal to the fifth preset value, it is determined that the environment information of the vehicle meets the preset condition, and then it is determined that the use scenario of the window 102 is the closing scenario. Optionally, the noise information of the environment around the vehicle 100 may be obtained by using a preset sound sensor.

In another possible implementation, when the weather information indicates that the weather at the location of the vehicle 100 is poor weather, it is determined that the environment information of the vehicle meets the preset condition, and then it is determined that the use scenario of the window 102 is the closing scenario. Optionally, the weather information of the location of the vehicle 100 may be obtained by using a high-definition map.

3. The distance between the vehicle and the target object is less than or equal to the first preset value.

It may be understood that the target object is the interference object of the vehicle 100. The interference object refers to an object that is near the vehicle 100 and that affects safety of the user in the vehicle or an object that causes interference to normal driving of the vehicle 100. In this case, in this embodiment of this application, the interference object may include a danger target and an interference target. The danger target is an object that is near the vehicle and that affects safety of the user in the vehicle. The danger target may include but is not limited to a beast and a vicious person. The beast may be, for example, at least one of a tiger, a lion, or a large dog. The vicious person may be, for example, a person holding a knife/gun or a masked person. The interference target is an object that is near the vehicle and that causes interference to normal driving of the vehicle. The interference target may include, for example, a sprinkler and/or a dump truck on an adjacent lane. Correspondingly, in this embodiment of this application, the target object may include a danger target and an interference target.

For example, the target object is a beast. If the distance between the vehicle 100 and the beast is less than or equal to the first preset value, it is determined that the use scenario of the window 102 is a closing scenario.

For another example, the target object is a vicious person. If the distance between the vehicle 100 and the vicious person is less than or equal to the first preset value, it is determined that the use scenario of the window 102 is the closing scenario.

For another example, the target object is a sprinkler. If the distance between the vehicle 100 and the sprinkler is less than or equal to the first preset value, it is determined that the use scenario of the window 102 is the closing scenario.

In a possible implementation, the vehicle 100 may obtain image data corresponding to the target object, and process the image data by using a preset algorithm, to obtain the category information of the target object. The vehicle 100 may obtain the image data of the target object by using the camera apparatus and/or the roadside device disposed on the vehicle 100. This is not specifically limited in this embodiment of this application.

For example, the vehicle 100 may obtain the image data of the target object by using the vehicle-mounted camera, and process the image data by using a support vector machine (support vector machine, SVM) algorithm, to obtain the category information of the target object. The SVM algorithm may be implemented by using the following formula:

$$W^T x_i + b > 0, y_i = +1;$$

$$W^T x_i + b < 0, y_i = -1;$$

$$min_{w,b} \frac{1}{2} \|\omega\|^2, S.t.\, y_i(\omega^T x_i + b) \geq 1.$$

i is a positive integer greater than or equal to 1 and less than m, m is a quantity of to-be-recognized objects in the image data, w and b are coefficients of a classification function, $x_i$ is used to represent a feature of a to-be-recognized object in the image data, $y_i$ is used to represent a classification label corresponding to a category of the to-be-recognized object in the image data, $W^T$ is used to represent a weight value of the feature of the to-be-recognized object in the image data, and $S.t.\, y_i(\omega^T x_i + b) \geq 1$ is used to represent a constraint of the algorithm.

In a possible implementation, the vehicle 100 may further obtain point cloud data corresponding to the target object, and process the point cloud data by using a preset algorithm, to obtain the behavior information of the target object. The vehicle 100 may obtain the point cloud data of the target object by using a 3D point cloud scanning apparatus (for example, a radar) disposed on the vehicle 100 and/or a 3D point cloud scanning apparatus (for example, a radar) of a roadside device. This is not specifically limited in this embodiment of this application.

For example, the vehicle 100 may obtain the point cloud data of the target object by using the vehicle-mounted radar, and process the point cloud data by using a preset ranging algorithm and a preset speed measurement algorithm, to obtain the behavior information of the target object. The behavior information of the target object may be represented by using the following formula:

$$y_{intention} = \begin{cases} -2, & v_r < v_{r1} \\ -1, & v_r \in [v_{r1}, v_{r2}] \\ 0, & v_r \in [v_{r2}, v_{r3}] \\ 1, & v_r > v_{r3} \end{cases}$$

In the formula, $y_{intention}$ is used to represent the behavior information (also referred to as a motion intention) of the target object, Vr is used to represent a difference between a speed of the target object and a speed of the vehicle 100 in a coordinate system of the vehicle 100, and $v_{ri}$ G [1,3] is used to represent a reference speed of the target object. When $y_{intention}$ is 1, it indicates that the target object is moving away from the vehicle 100. When $y_{intention}$ is 0, it indicates that a distance between the target object and the vehicle 100 remains unchanged. When $y_{intention}$ is -1, it indicates that the target object is slowly approaching the vehicle 100. When $y_{intention}$ is 1, it indicates that the distance between the target object and the vehicle 100 remains unchanged. When $y_{intention}$ is -2, it indicates that the target object is quickly approaching the vehicle 100.

In a possible implementation, the vehicle 100 may be pre-associated with at least one first user. The vehicle 100 obtains, by performing classification and identification on the target object, at least one second user corresponding to the target object, but there is no same user in the at least one first user and the at least one second user. In this embodiment of this application, "there is no same user in the at least one first user and the at least one second user" may be understood as that similarity between any first user in the at least one first user and any second user in the at least one second user is less than a preset threshold. In this way, wrongly identification of the vicious person can be effectively reduced, thereby improving user experience.

Example 1: A vehicle owner may set the at least one first user to a family member or a friend of the vehicle owner. When identifying the at least one second user corresponding to the target object, the vehicle 100 determines the at least one second user as the target object when a similarity between any first user in the at least one first user and any second user in the at least one second user is less than a preset threshold. In this way, wrongly identification of the family member or the friend of the vehicle owner as a vicious person can be effectively reduced, thereby effectively improving user experience.

Example 2: The vehicle owner may set the at least one first user to a user wear special clothing (for example, police clothing) When identifying the at least one second user corresponding to the target object, the vehicle 100 determines the at least one second user as the target object when a similarity between any first user in the at least one first user and any second user in the at least one second user is less than a preset threshold. In this way, wrongly identification of a police as a vicious person can be effectively reduced.

2. Window opening scenario

In this embodiment of this application, there are a plurality of window opening scenarios corresponding to the opening mode, including but not limited to the following scenarios.

 1. A temperature of the inside of the vehicle is greater than or equal to a second preset value.
 In a possible implementation, the vehicle 100 may obtain the temperature information of the inside of the vehicle by using a built-in temperature sensor. If the temperature information indicates that the temperature of the inside of the vehicle is greater than or equal to the second preset value, it is determined that the use scenario of the window 102 is the window opening scenario.
 2. The oxygen level of the inside of the vehicle is less than or equal to the third preset value.
 In a possible implementation, the vehicle 100 may obtain the oxygen information of the inside of the vehicle by using a built-in oxygen detector. If the oxygen information indicates that the oxygen level of the inside of the vehicle is less than or equal to the third preset value, it is determined that the use scenario of the window 102 is the window opening scenario.
 3. A humidity value of the inside of the vehicle is greater than or equal to the fourth preset value.

In a possible implementation, the vehicle 100 may obtain the humidity information of the inside of the vehicle by using a built-in humidity sensor. If the humidity information indicates that the humidity value of the inside of the vehicle is greater than or equal to the fourth preset value, it is determined that the use scenario of the window 102 is the window opening scenario.

For example, if water enters the vehicle 100, the vehicle 100 obtains the humidity information of the inside of the vehicle by using the built-in humidity sensor. If the humidity information indicates that the humidity value of the inside of the vehicle is greater than or equal to the fourth preset value, it is determined that the use scenario of the window 102 is the window opening scenario. In this way, when the vehicle encounters a flood disaster or the vehicle is waterlogged, the use scenario of the window 102 is determined as the window opening scenario, so that the window 102 can perform a corresponding window opening operation, and then the user can escape or seek help. This effectively improves safety of using the vehicle by the user.

4. There is a collision behavior of the vehicle.

In a possible implementation, the behavior information of the vehicle 100 may be obtained. If the behavior information indicates that there is a collision behavior of the vehicle, it is determined that the use scenario of the window 102 is the window opening scenario. The vehicle may detect the behavior information of the vehicle by using a built-in vibration sensor, or obtain the behavior information of the vehicle by using the roadside device. This is not specifically limited in this embodiment of this application. In this way, when there is the collision behavior of the vehicle, the use scenario of the window 102 is determined as the window opening scenario, so that the window 102 can perform a corresponding window opening operation, and then an escaping window is provided for the user. This effectively improves safety of using the vehicle by the user.

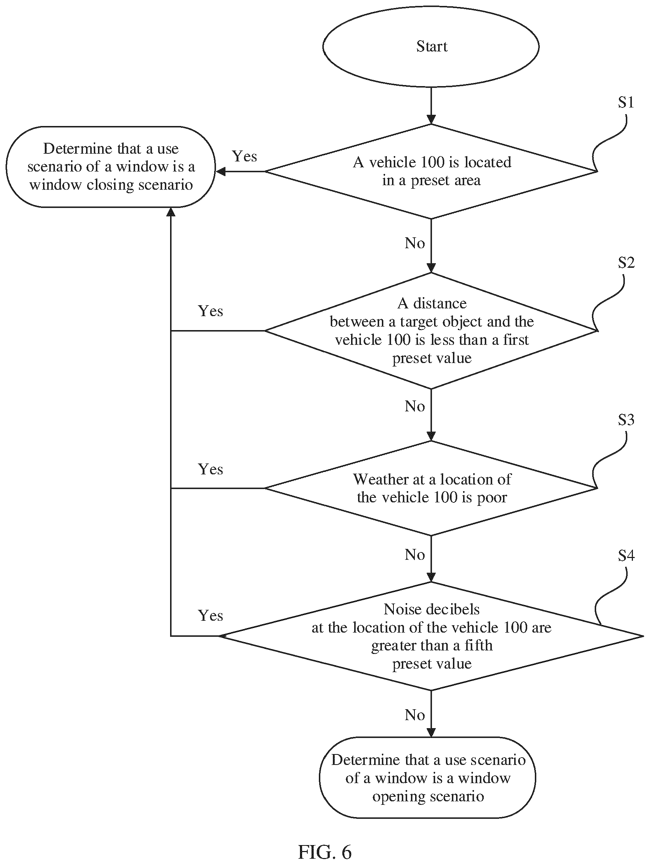

In some possible embodiments, the vehicle 100 or the control device 101 may identify a use scenario of the window 102 by combining a plurality of types of information of the vehicle 100. For example, refer to FIG. 6. Identifying the use scenario of the window 102 may include the following steps.

S 1: Determine whether the vehicle 100 is located in a preset area.

When it is determined that the vehicle is located in the preset area, it is determined that the use scenario of the window is a window closing scenario; or when it is determined that the vehicle is not located in the preset area, step S2 is performed.

S2: Determine whether the distance between the target object and the vehicle 100 is less than or equal to the first preset value.

When it is determined that the distance between the target object and the vehicle 100 is less than or equal to the first preset value, it is determined that the use scenario of the window is the window closing scenario; or when it is determined that the distance between the target object and the vehicle 100 is greater than or equal to the first preset value, step S3 is performed.

S3: Determine whether the weather at the location of the vehicle 100 is poor.

When it is determined that the weather at the location of the vehicle 100 is poor, it is determined that the use scenario of the window is the window closing scenario. When it is determined whether the weather at the location of the vehicle 100 is poor, step S3 is performed.

S4: Determine whether the noise decibels at the location of the vehicle 100 are greater than or equal to the fifth preset value.

When it is determined that the noise decibels at the location of the vehicle 100 are greater than or equal to the fifth preset value, it is determined that the use scenario of the window is the window closing scenario; or when it is determined that the noise decibels at the location of the vehicle 100 are less than or equal to the fifth preset value, it is determined that the use scenario of the window is the window opening scenario.

In this embodiment, the use scenario of the window 102 is determined by combining a plurality of factors, so that the determined use scenario is more accurate, and the use mode of the window 102 determined based on the use scenario is more accurate.

For ease of understanding, the following separately describes a process of controlling, when the first use mode is the opening mode and the closing mode, the window 102 to perform the first operation corresponding to the second mode.

1. A case in which the first use mode is the closing mode

In a possible implementation, different window closing scenarios corresponding to the closing mode may correspond to different level information. Correspondingly, different level information may correspond to different window closing policies. The level information may be represented by using an emergency level or a danger level of the window closing scenario. The emergency level may be represented by using the environment information of the vehicle, and the danger level may be represented by using the category information of the target object.

Example 1: Refer to Table 1. Table 1 shows a mapping relationship between a window closing scenario, an emergency level, and a window closing policy. A first-level emergency degree is higher than a second-level emergency degree, and a second-level emergency degree is higher than a third-level emergency degree. If the window closing scenario is the scenario in which the vehicle is located in the preset area, and an emergency level corresponding to the window closing scenario is a first level, a window closing policy corresponding to the window closing scenario is "Forbid enabling of the anti-clamping function and close the window 102." If the window closing scenario is the scenario in which the weather at the location of the vehicle is poor weather, and an emergency level corresponding to the window closing scenario is a second level, a window closing policy corresponding to the window closing scenario is "Obtain a user instruction and determine, according to the user instruction, whether to close the window 102." If the window closing scenario is the scenario in which the noise decibels at the location of the vehicle are greater than or equal to the fifth preset value, and an emergency level corresponding to the window closing scenario is a third level, a window closing policy corresponding to the window closing scenario is "Obtain a user instruction and determine, according to the user instruction, whether to forbid enabling of the anti-clamping function and whether to close the window 102."

**Table 1**

| Window closing scenario | Emergency level | Window closing policy |
|---|---|---|
| The vehicle is located in the preset area. | First level | Forbid enabling of the anti-clamping function and close the window 102. |
| The weather at the location of the vehicle is poor weather. | Second level | Obtain a user instruction and determine, according to the user instruction, whether to close the window 102. |
| The noise decibels at the location of the vehicle are greater than or equal to the fifth preset value. | Third level | Obtain a user instruction and determine, according to the user instruction, whether to forbid enabling of the anti-clamping function and whether to close the window 102. |

Example 2: Refer to Table 2. Table 2 shows a mapping relationship between a window closing scenario, a danger level, and a window closing policy. A first-level emergency degree is higher than a second-level emergency degree, and a second-level emergency degree is higher than a third-level emergency degree. The window closing scenario includes scenarios in which distances between different types of target objects and the vehicle are less than or equal to the first preset value. If the window closing scenario is the scenario in which a distance between the vicious person and the vehicle is less than or equal to the first preset value, and an emergency level corresponding to the window closing scenario is a first level, a window closing policy corresponding to the window closing scenario is "Forbid enabling of the anti-clamping function and close the window 102." If the window closing scenario is the scenario in which a distance between the beast and the vehicle is less than or equal to the first preset value, and an emergency level corresponding to the window closing scenario is a second level, a window closing policy corresponding to the window closing scenario is "Obtain a user instruction and determine, according to the user instruction, whether to close the window 102." If the window closing scenario is the scenario in which a distance between the vehicle and the sprinkler or the dump truck is less than or equal to the first preset value, and an emergency level corresponding to the window closing scenario is a third level, a window closing policy corresponding to the window closing scenario is "Obtain a user instruction and determine, according to the user instruction, whether to forbid enabling of the anti-clamping function and whether to close the window 102."

**Table 2**

| Window closing scenario | Danger level | Window closing policy |
|---|---|---|
| The distance between the vicious person and the vehicle is less than or equal to the first preset value. | First level | Forbid enabling of the anti-clamping function and close the window 102. |
| The distance between the beast and the vehicle is less than or equal to the first preset value. | Second level | Obtain a user instruction and determine, according to the user instruction, whether to close the window 102. |
| The distance between the vehicle and the sprinkler or the dump truck is less than or equal to the first preset value | Third level | Obtain a user instruction and determine, according to the user instruction, whether to forbid enabling of the anti-clamping function and whether to close the window 102. |

In conclusion, when the first use mode is the closing mode, and the window closing scenario corresponding to the closing mode includes the level information, the window closing policy mainly includes the following cases.
Case 1: Forbid enabling of the anti-clamping function and close the window 102.
Case 2: Obtain a user instruction and determine, according to the user instruction, whether to close the window 102.
Case 3: Obtain a user instruction and determine, according to the user instruction, whether to forbid enabling of the anti-clamping function and whether to close the window 102.
In Case 1, the first use mode is the closing mode of forbidding enabling of the anti-clamping function, and the second use mode is the same as the first use mode. In this case, that the control device 101 controls the window 102 to perform the first operation corresponding to the second use mode includes: forbidding enabling of the anti-clamping function and controlling the window 102 to be closed.
In Case 2, the first use mode is the closing mode of forbidding enabling of the anti-clamping function, and the control device 101 needs to obtain the user instruction and determine, according to the user instruction, whether to close the window 102. If the obtained user instruction indicates that the user approves to close the window, and the second use mode is the same as the first use mode, that the control device 101 controls the window 102 to perform the first operation corresponding to the second use mode includes: forbidding enabling of the anti-clamping function and controlling the window 102 to be closed. If the obtained user instruction indicates that the user does not approve to close the window, and the second use mode is different from the first use mode, that the control device 101 controls the window 102 to perform the first operation corresponding to the second use mode includes: controlling the window 102 to keep a current opening/closing state.
In Case 3, the first use mode is the closing mode of forbidding enabling of the anti-clamping function, and the control device 101 needs to obtain the user instruction and determine, according to the user instruction, whether to close the window 102. If the obtained user instruction indicates that enabling of the anti-clamping function is forbidden and indicates to close the window, and the second use mode is the same as the first use mode, that the control device 101 controls the window 102 to perform the first operation corresponding to the second use mode includes: forbidding enabling of the anti-clamping function and controlling the window 102 to be closed. If the obtained user instruction indicates that enabling of the anti-clamping function is approved and indicates to close the window, and the second use mode is different from the first use mode, the control device 101 controls the window 102 to perform the first operation corresponding to the second use mode includes: enabling the anti-clamping function and controlling the window 102 to be closed. If the obtained user instruction indicates that the user does not approve to close the window, and the second use mode is different from the first use mode, that the control device 101 controls the window 102 to perform the first operation corresponding to the second use mode includes: controlling the window 102 to keep a current opening/closing state.

It can be learned from the foregoing descriptions that the window closing scenario corresponding to the closing mode includes the level information. Therefore, in a possible implementation, different closing speeds may be set for different level information, and that the control device 101 controls the window 102 to be closed includes: controlling, based on a closing speed corresponding to the level information, the window 102 to be closed. In this way, with reference to the level information of the window closing scenario, closing of the window 102 is flexibly controlled, so that the vehicle can close the window in time in a dangerous window closing scenario. This effectively improves safety of using the vehicle by the user.

For example, refer to Table 3. Table 3 shows a mapping relationship between level information and a window closing speed. If the level information of the closing mode is a first level, and a window closing speed corresponding to the first level is a speed 1, the window 102 is controlled to be closed at the speed 1. If the level information of the closing mode is a second level, and a window closing speed corresponding to the second level is a speed 2, the window 102 is controlled to be closed at the speed 2. If the level information of the closing mode is a third level, and a window closing speed corresponding to the third level is a speed 3, the window 102 is controlled to be closed at the speed 3.

**Table 3**

| Level information | Window closing speed |
|---|---|
| First level | Speed 1 |
| Second level | Speed 2 |
| Third level | Speed 3 |

In a possible implementation, the second use mode is the closing mode, and the control device 101 may further control the window 102 to perform a third operation corresponding to the fourth use mode, where the third operation is used to restore an opening/closing state of the window 102 to a state that the window is in before the first operation corresponding to the second use mode is performed. In other words, the control device 101 may control the opening/closing state of the window 102 to restore to the opening/closing state that the window is in before the window 102 performs the operation corresponding to the closing mode. In this way, when a use scenario of the window is safe, the window 102 is controlled to perform automatic restoration. This further improves user experience. The fourth use mode is different from the second use mode.

2. A case in which the first use mode is the opening mode

In a possible implementation, different window opening scenarios corresponding to the opening mode may correspond to different level information. Correspondingly, different level information may correspond to different window opening policies. The level information corresponding to the window opening scenario may be represented by using a type of the window opening scenario.

Example 1: Refer to Table 4. Table 4 shows a mapping relationship between a window opening scenario, an emergency level, and a window opening policy. A first-level emergency degree is higher than a second-level emergency degree. If the window opening scenario is a scenario in which there is a collision behavior of the vehicle or the oxygen level of the inside of the vehicle is less than the third preset value, and an emergency level corresponding to the window opening scenario is a first level, a windowing policy corresponding to the window opening scenario is "Directly open the window 102." If the window opening scenario is a scenario in which a temperature of the inside of the vehicle is greater than or equal to the second preset value or a humidity value of the inside of the vehicle is greater than or equal to the fourth preset value, and an emergency level corresponding to the window opening scenario is a second level, a window opening policy corresponding to the window opening scenario is "Obtain a user instruction and determine, according to the user instruction, whether to open the window 102."

**Table 4**

| Window opening scenario | Emergency level | Window opening policy |
|---|---|---|
| There is a collision behavior of the vehicle. | First level | Directly open the window 102. |
| The oxygen level of the inside of the vehicle is less than the third preset value. | | |
| The temperature of the inside of the vehicle is greater than or equal to the second preset value. | Second level | Obtain a user instruction and determine, according to the user instruction, whether to open the window 102. |
| The humidity value of the inside of the vehicle is greater than or equal to the fourth preset value. | | |

In conclusion, when the first use mode is the opening mode, and the window opening scenario corresponding to the opening mode includes the level information, the window opening policy mainly includes the following cases.

Case 1: Directly open the window 102.

Case 2: Obtain a user instruction and determine, according to the user instruction, whether to open the window 102.

In Case 1, the first use mode is the opening mode, and the second use mode is the same as the first use mode. In this case, that the control device 101 controls the window 102 to perform the first operation corresponding to the second use mode may be: controlling the window 102 to be opened.

In Case 2, the first use mode is the opening mode, and the control device 101 needs to obtain the user instruction and determine, according to the user instruction, whether to open the window 102. When the obtained user instruction indicates that the user approves to open the window, and the second use mode is the same as the first use mode, the control device 101 controlling the window 102 to perform the first operation corresponding to the second use mode may be controlling the window 102 to be opened. When the obtained user instruction indicates that the user does not approve to open the window, and the second use mode is different from the first use mode, the control device 101 controlling the window 102 to perform the first operation corresponding to the second use mode may be controlling the window 102 to keep a current opening/closing state.

It can be learned from the foregoing descriptions that the window opening scenario corresponding to the opening mode includes the level information. Therefore, in a possible implementation, different opening speeds may be set for different level information. Therefore, in a possible implementation, the control device 101 controlling the window 102 to be opened may be controlling, based on an opening speed corresponding to the level information, the window 102 to be opened. In this way, with reference to the level information of the window opening scenario, opening of the window 102 is flexibly controlled, so that the vehicle can open the window in time in a dangerous window opening scenario. This effectively improves safety of using the vehicle by the user.

For example, refer to Table 5. Table 5 shows a mapping relationship between level information and a window opening speed. If the level information of the opening mode is a first level, and a window opening speed corresponding to the first level is a speed 1, the window 102 is controlled to be opened at the speed 1. If the level information of the opening mode is a second level, and a window opening speed corresponding to the second level is a speed 2, the window 102 is controlled to be opened at the speed 2.

**Table 5**

| Level information | Window opening speed |
|---|---|
| First level | Speed 1 |
| Second level | Speed 2 |

The second use mode is the opening mode, and the control device 101 controls the window 102 to perform the first operation corresponding to the second use mode. There are a plurality of cases, including but not limited to the following cases.

1. If the window 102 is in an incompletely closed state, the window 102 is controlled to be in a current opening/closing state.

2. If the window 102 is in a completely closed state, the window 102 is controlled to be opened.

3. If the window 102 is in an incompletely closed state, the window 102 is controlled to be opened.

If the window 102 is in the completely closed state or the incompletely closed state, the controlling the window 102 to be opened includes: controlling the opening/closing state of the window 102 to restore to an opening/closing state that the window 102 is in before being in the completely closed state or the incompletely closed state; or controlling the opening/closing state of the window 102 to be a completely opened state. The window 102 is controlled to restore to the opening/closing state that the window is in before being closed, so that control on the window 102 complies with a use habit of the user. This effectively improves user experience.

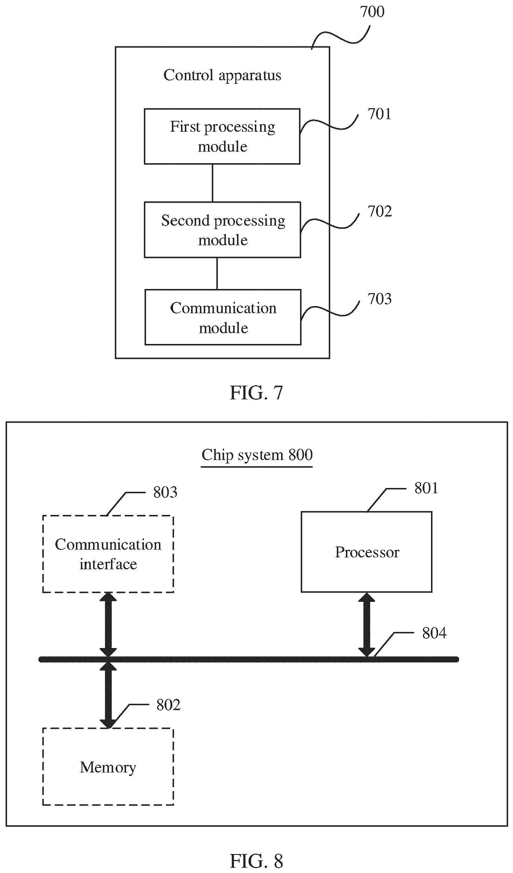

Based on the foregoing embodiments and a same technical concept, an embodiment of this application further provides a control apparatus, configured to perform the steps performed by the control device 101 in the foregoing method embodiments. For related features, refer to the foregoing method embodiments. Details are not described herein again. As shown in FIG. 7, a control apparatus 700 includes:

a first processing module 701, configured to control a prompt apparatus to output first information, where the first information indicates a first use mode of a window; and

a second processing module 702, configured to control the window to perform a first operation corresponding to a second use mode.

In Implementation 1, the apparatus further includes a communication module 703, the first use mode is the same as the second use mode, and before the second processing module 702 controls the window to perform the first operation corresponding to the second use mode, the communication module 703 is configured to receive a first instruction within first preset duration, where the first instruction indicates that a user confirms or approves use of the first use mode.

In Implementation 2, the apparatus further includes a communication module 703, the first use mode is different from the second use mode, and before the second processing module 702 controls the window to perform the first operation corresponding to the second use mode, the communication module 703 is configured to receive a second instruction within first preset duration, where the second instruction indicates that a user does not approve use of the first use mode; and/or the first processing module 701 is further configured to determine that the communication module 703 does not receive a first instruction within the first preset duration, where the first instruction indicates that the user confirms or approves use of the first use mode.

Optionally, the apparatus further includes a communication module 703, where the communication module 703 may be configured to receive feedback information from the user, where the feedback information indicates a third use mode different from the first use mode; and the second processing module 702 may be further configured to control the window to perform a second operation corresponding to the third use mode.

In a possible implementation, the first use mode is a closing mode, the first information further indicates the user to close the window or indicates at least one of location information of a vehicle associated with the window, environment information of the vehicle, category information of a target object, or behavior information of the target object, and the target object is an interference object of the vehicle.

Correspondingly, the second use mode is a closing mode; and the second processing module 702 is configured to control the window to perform the first operation corresponding to the second use mode, and is specifically configured to control the window to be closed. Optionally, the closing mode includes level information; and when the second processing module 702 is configured to control the window to be closed, the second processing module 702 is specifically configured to control, based on a closing speed corresponding to the level information, the window to be closed. The closing mode is associated with at least one of the following window closing scenarios: The vehicle is located in a preset area; the environment information of the vehicle meets a preset condition; or a distance between the vehicle and the target object is less than a first preset value.

Optionally, the vehicle corresponds to at least one first user, the target object corresponds to at least one second user, and there is no same user in the at least one first user and the at least one second user.

Optionally, the second use mode is a closing mode; and the second processing module 702 is further configured to control the window to perform a third operation corresponding to a fourth use mode, where the third operation is used to restore an opening/closing state of the window to a state that the window is in before the first operation is performed.

In a possible implementation, the first use mode is an opening mode, and the first information further indicates the user to open the window or indicates at least one of location information of a vehicle associated with the window or environment information of the vehicle.

Correspondingly, the second use mode is an opening mode; and the second processing module 702 is configured to control the window to perform the first operation corresponding to the second use mode, and is specifically configured to: control the window to be in a current opening if the window is in an incompletely closed state /closing state; or control the window to be opened if the window is in a completely closed state or an incompletely closed state.

Optionally, if the window is in the completely closed state or the incompletely closed state, the second processing module 702 is configured to control the window to be opened, and is specifically configured to: control an opening/closing state of the window to restore to an opening/closing state that the window is in before being in the completely closed state or the incompletely closed state; or control an opening/closing state of the window to be a completely opened state.

The opening mode is associated with at least one of the following window opening scenarios: A temperature value of the inside of the vehicle is greater than a second preset value; an oxygen level of the inside of the vehicle is less than a third preset value; there is a collision behavior of the vehicle; or a humidity value of the inside of the vehicle is greater than a fourth preset value.

An embodiment of this application further provides a terminal device. The terminal device may include the foregoing control apparatus 700. It should be noted that the terminal in this embodiment of this application may be, for example, a vehicle or another apparatus in the vehicle. The another apparatus includes but is not limited to a vehicle-mounted terminal, a vehicle-mounted controller, a vehicle-mounted module, a vehicle-mounted assembly, a vehicle-mounted component, a vehicle-mounted chip, a vehicle-mounted unit, or another sensor like a vehicle-mounted radar or a vehicle-mounted camera. The vehicle may use the vehicle-mounted terminal, the vehicle-mounted controller, the vehicle-mounted module, the vehicle-mounted assembly, the vehicle-mounted component, the vehicle-mounted chip, the vehicle-mounted unit, the vehicle-mounted radar, or the vehicle-mounted camera. The terminal may be another smart terminal other than the vehicle, or a component disposed in another smart terminal other than the vehicle. The smart terminal may be a smart transportation device, a smart home device, a robot, and the like, for example, including but not limited to a smart terminal or a controller in a smart terminal, a chip, another sensor like a radar or a camera, another component, or the like to implement the control method provided in embodiments of this application.

An embodiment of this application further provides a chip system. Refer to FIG. 8. A chip system 800 includes at least one processor. When program instructions are executed in the at least one processor 801, the control method in the embodiment shown in FIG. 3 is implemented.

Optionally, the chip system further includes a communication interface 803, and the communication interface is configured to input or output information.

Optionally, the chip system further includes a memory 802. The memory 802 is coupled to a processor through the communication interface 803 and is configured to store the foregoing instructions, so that the processor reads, through the communication interface 803, the instructions stored in the memory.

It should be understood that a connection medium between the processor 801, the memory 802, and the communication interface 803 is not limited in this embodiment of this application. In this embodiment of this application, the memory 802, the processor 801, and the communication interface 803 are connected via a communication bus 804 in FIG. 8. The bus is represented by a thick line in FIG. 8. A manner of connection between other components is merely an example for description. This is not limited. The bus may include an address bus, a data bus, a control bus, and the like. For ease of representation, only one thick line is used to represent the bus in FIG. 8, but this does not mean that there is only one bus, only one type of bus, or the like.

An embodiment of this application further provides a computer program product including instructions. When the computer program product runs on the foregoing apparatus 700, the control method in the foregoing embodiments is performed.

An embodiment of this application provides a computer-readable storage medium. The computer-readable storage medium stores a computer program. When the computer program is run, the control method in the embodiment is performed.

For example, division of the modules or units is merely logical function division. In actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, in other words, may be located in one place, or may be distributed on different places. Some or all of the units may be selected based on actual requirements to achieve the objectives of the solutions of embodiments.

In addition, function units in embodiments of this application may be integrated into one processing module, or each of the units may exist alone physically, or two or more units are integrated into one unit. The integrated unit may be implemented in a form of hardware, or may be implemented in a form of a software function unit.

In this embodiment of this application, module division is an example, and is merely logical function division. There may be another division manner in actual implementation. In addition, function modules in embodiments of this application may be integrated into one processor, or may exist alone physically, or two or more modules may be integrated into one module. The integrated module may be implemented in a form of hardware, or may be implemented in a form of a software function module.

All or some of the methods in embodiments of this application may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk drive, or a magnetic tape), an optical medium (for example, a digital video disc (digital video disc, DVD for short)), a semiconductor medium, or the like.

In embodiments of this application, on the premise that there is no logical conflict, embodiments may be mutually referenced. For example, methods and/or terms in the method embodiments may be mutually referenced, and functions and/or terms in the apparatus embodiments may be mutually referenced. For example, functions and/or terms between the apparatus embodiments and the method embodiments may be mutually referenced.

A person skilled in the art can make various modifications and variations to this application without departing from the scope of this application. This application is intended to cover these modifications and variations of this application provided that they fall within the scope defined by the following claims and their equivalent technologies.

## Claims

1. A control method, comprising:

   controlling a prompt apparatus to output first information, wherein the first information indicates a first use mode of a window; and
   controlling the window to perform a first operation corresponding to a second use mode.

2. The method according to claim 1, wherein the first use mode is the same as the second use mode; and
   before the controlling the window to perform a first operation corresponding to a second use mode, the method further comprises:
   receiving a first instruction within first preset duration, wherein the first instruction indicates that a user confirms or approves use of the first use mode.

3. The method according to claim 1, wherein the first use mode is different from the second use mode; and
   before the controlling the window to perform a first operation corresponding to a second use mode, the method further comprises:
   receiving a second instruction within first preset duration, wherein the second instruction indicates that a user does not approve use of the first use mode; and/or determining that a first instruction is not received within the first preset duration, wherein the first instruction indicates that the user confirms or approves use of the first use mode.

4. The method according to any one of claims 1 to 3, wherein the method further comprises:

   receiving a third instruction in a process of controlling the window to perform the first operation, wherein the third instruction indicates a third use mode different from the first use mode; and
   controlling the window to perform a second operation corresponding to the third use mode, wherein
   the second operation is different from the first operation.

5. The method according to any one of claims 1 to 4, wherein the first use mode is a closing mode, the first information further indicates the user to close the window or indicates at least one of location information of a vehicle associated with the window, environment information of the vehicle, category information of a target object, or behavior information of the target object, and the target object is an interference object of the vehicle.

6. The method according to any one of claims 1 to 5, wherein the second use mode is a closing mode; and
   the controlling the window to perform a first operation corresponding to a second use mode comprises:

controlling the window to be closed.

7. The method according to claim 6, wherein the closing mode comprises level information; and
the controlling the window to be closed comprises:
controlling, based on a closing speed corresponding to the level information, the window to be closed.

8. The method according to any one of claims 5 to 7, wherein the closing mode is associated with at least one of the following window closing scenarios:

the vehicle is located in a preset area;
the environment information of the vehicle meets a preset condition; or
a distance between the vehicle and the target object is less than a first preset value.

9. The method according to any one of claims 5 to 8, wherein the vehicle corresponds to at least one first user, the target object corresponds to at least one second user, and there is no same user in the at least one first user and the at least one second user.

10. The method according to any one of claims 5 to 9, wherein the second use mode is a closing mode, and the method further comprises:
controlling the window to perform a third operation corresponding to a fourth use mode, wherein the third operation is used to restore an opening/closing state of the window to a state that the window is in before the first operation is performed.

11. The method according to any one of claims 1 to 4, wherein the first use mode is an opening mode, and the first information further indicates the user to open the window or indicates at least one of location information of a vehicle associated with the window or environment information of the vehicle.

12. The method according to any one of claims 1 to 4 or claim 11, wherein the second use mode is an opening mode; and
the controlling the window to perform a first operation corresponding to a second use mode comprises:

controlling the window to be in a current opening/closing state if the window is in an incompletely closed state; or
controlling the window to be opened if the window is in a completely closed state or an incompletely closed state.

13. The method according to claim 12, wherein the controlling the window to be opened if the window is in a completely closed state or an incompletely closed state comprises:

controlling an opening/closing state of the window to restore to an opening/closing state that the window is in before being in the completely closed state or the incompletely closed state; or
controlling an opening/closing state of the window to be a completely opened state.

14. The method according to any one of claims 11 to 13, wherein the opening mode is associated with at least one of the following window opening scenarios:

a temperature value of the inside of the vehicle is greater than a second preset value;
an oxygen level of the inside of the vehicle is less than a third preset value;
there is a collision behavior of the vehicle; or
a humidity value of the inside of the vehicle is greater than a fourth preset value.

15. A control apparatus, comprising:

a first processing module, configured to control a prompt apparatus to output first information, wherein the first information indicates a first use mode of a window; and
a second processing module, configured to control the window to perform a first operation corresponding to a second use mode.

16. The apparatus according to claim 15, wherein the apparatus further comprises a communication module, the first use mode is the same as the second use mode, and before the second processing module controls the window to perform the first operation corresponding to the second use mode, the communication module is configured to:

receive a first instruction within first preset duration, wherein the first instruction indicates that a user confirms or approves use of the first use mode.

17. The apparatus according to claim 15, wherein the apparatus further comprises a communication module, the first use mode is different from the second use mode, and before the second processing module controls the window to perform the first operation corresponding to the second use mode,
the communication module is configured to receive a second instruction within first preset duration, wherein the second instruction indicates that a user does not approve use of the first use mode; and/or the first processing module is further configured to determine that the communication module does not receive a first instruction within the first preset duration, wherein the first instruction indicates that the user confirms or approves use of the first use mode.

18. The apparatus according to any one of claims 15 to 17, wherein the apparatus further comprises a communication module;

the communication module is configured to receive a third instruction in a process of controlling the window to perform the first operation, wherein the third instruction indicates a third use mode different from the first use mode; and
the second processing module is further configured to control the window to perform a second operation corresponding to the third use mode, wherein the second operation is different from the first operation.

19. The apparatus according to any one of claims 15 to 18, wherein the first use mode is a closing mode, the first information further indicates the user to close the window or indicates at least one of location information of a vehicle associated with the window, environment information of the vehicle, category information of a target object, or behavior information of the target object, and the target object is an interference object of the vehicle.

20. The apparatus according to any one of claims 15 to 19, wherein the second use mode is a closing mode; and

the second processing module is configured to control the window to perform the first operation corresponding to the second use mode, and is specifically configured to
control the window to be closed.

21. The apparatus according to claim 20, wherein the closing mode comprises level information; and
when the second processing module is configured to control the window to be closed, the second processing module is specifically configured to:
control, based on a closing speed corresponding to the level information, the window to be closed.

22. The apparatus according to any one of claims 19 to 21, wherein the closing mode is associated with at least one of the following window closing scenarios:

the vehicle is located in a preset area;
the environment information of the vehicle meets a preset condition; or
a distance between the vehicle and the target object is less than a first preset value.

23. The apparatus according to any one of claims 19 to 22, wherein the vehicle corresponds to at least one first user, the target object corresponds to at least one second user, and there is no same user in the at least one first user and the at least one second user.

24. The apparatus according to any one of claims 19 to 23, wherein the second use mode is a closing mode; and the second processing module is further configured to:
control the window to perform a third operation corresponding to a fourth use mode, wherein the third operation is used to restore an opening/closing state of the window to a state that the window is in before the first operation is performed.

25. The apparatus according to any one of claims 15 to 18, wherein the first use mode is an opening mode, and the first information further indicates the user to open the window or indicates at least one of location information of a vehicle associated with the window or environment information of the vehicle.

26. The apparatus according to any one of claims 15 to 18 or claim 25, wherein the second use mode is an opening mode; and

the second processing module is configured to control the window to perform the first operation corresponding to the second use mode, and is specifically configured to
control the window to be in a current opening/closing state if the window is in an incompletely closed state; or
control the window to be opened if the window is in a completely closed state or an incompletely closed state.

27. The apparatus according to claim 26, wherein if the window is in the completely closed state or the incompletely closed state, the second processing module is configured to control the window to be opened and is specifically configured to:

control an opening/closing state of the window to restore to an opening/closing state that the window is in before being in the completely closed state or the incompletely closed state; or
control an opening/closing state of the window to be a completely opened state.

28. The apparatus according to any one of claims 25 to 27, wherein the opening mode is associated with at least one of the following window opening scenarios:

a temperature value of the inside of the vehicle is greater than a second preset value;
an oxygen level of the inside of the vehicle is less than a third preset value;
there is a collision behavior of the vehicle; or
a humidity value of the inside of the vehicle is greater than a fourth preset value.

29. A control system, comprising the apparatus according to any one of claims 15 to 28.

30. The system according to claim 29, wherein the system further comprises a prompt apparatus; and
the prompt apparatus is configured to output first information, wherein the first information indicates a first use mode of a window.

31. A terminal, wherein the terminal comprises the apparatus according to any one of claims 15 to 28.

32. A computer-readable storage medium, wherein the computer-readable storage medium stores a computer program, and when the computer program is run, the method according to any one of claims 1 to 14 is implemented.

FIG. 1

EP 4 458 617 A1

FIG. 2A

FIG. 2B

A control device 101 controls a prompt apparatus to output first information, where the first information indicates a first use mode of a window 102

The control device 101 controls the window 102 to perform a first operation corresponding to a second use mode

FIG. 3

Closing mode

Opening mode

(a)                                                                        (b)

FIG. 4

The use mode of the window is the closing mode.
Do you want to close the window?

Cancel          OK

FIG. 5A

A beast is approaching the vehicle!
Enable the window closing mode.

Cancel          OK

FIG. 5B

Poor weather!
Enable the window closing mode.

Cancel          OK

FIG. 5C

The vehicle is in a wildlife park. The window closing
mode is to be enabled.

FIG. 5D

The oxygen level of the inside of the vehicle is low.
The window opening mode is to be enabled.

Cancel          OK

FIG. 5E

There is a collision behavior of the vehicle. The window opening mode is to be enabled.

FIG. 5F

The beast already leaves. Do you want to enable the window opening mode?

| Cancel | OK |

FIG. 5G

The weather at the location of the vehicle is poor weather. The window closing mode is to be enabled.

The level of the current window closing scenario is the first level.

FIG. 5H

The oxygen level of the inside of the vehicle is low. The window opening mode is to be enabled.

The level of the current window opening scenario is the first level.

FIG. 5I

FIG. 6

700

Control apparatus

First processing
module
701

Second processing
module
702

Communication
module
703

FIG. 7

Chip system 800

803

Communication
interface

801

Processor

804

802

Memory

FIG. 8

| INTERNATIONAL SEARCH REPORT | International application No. |
|---|---|
| | **PCT/CN2022/076457** |

**A. CLASSIFICATION OF SUBJECT MATTER**

B60R 16/023(2006.01)i

According to International Patent Classification (IPC) or to both national classification and IPC

**B. FIELDS SEARCHED**

Minimum documentation searched (classification system followed by classification symbols)

B60R,E05F

Documentation searched other than minimum documentation to the extent that such documents are included in the fields searched

Electronic data base consulted during the international search (name of data base and, where practicable, search terms used)

CNTXT, CNKI, VEN: 车窗, 控制, 输出, 模式, 提示, 显示, window, vehicle, control, output, mode, indicate, operation, screen, display, pattern

**C. DOCUMENTS CONSIDERED TO BE RELEVANT**

| Category* | Citation of document, with indication, where appropriate, of the relevant passages | Relevant to claim No. |
|---|---|---|
| X | CN 112392361 A (IAT AUTOMOBILE TECHNOLOGY CO., LTD.) 23 February 2021 (2021-02-23)<br>description, paragraphs 0025-0033, and figure 1 | 1-32 |
| X | CN 103786667 A (ZHEJIANG GEELY AUTOMOBILE HOLDINGS LTD. et al.) 14 May 2014 (2014-05-14)<br>description, paragraphs 0021-0040, and figure 1 | 1-32 |
| X | CN 109798041 A (GEELY AUTOMOBILE RESEARCH INSTITUTE (NINGBO) CO., LTD. et al.) 24 May 2019 (2019-05-24)<br>description, paragraphs 0046-0066, and figures 1-8 | 1-32 |
| X | CN 109505479 A (CHERY AUTOMOBILE CO., LTD.) 22 March 2019 (2019-03-22)<br>description, paragraphs 0056-0144, and figures 1-8 | 1-32 |
| A | CN 111502443 A (CRRC QINGDAO SIFANG CO., LTD.) 07 August 2020 (2020-08-07)<br>entire document | 1-32 |
| A | KR 20050009124 A (HYUNDAI MOTOR CO., LTD.) 24 January 2005 (2005-01-24)<br>entire document | 1-32 |
| A | JP 2013029004 A (PANASONIC CORP.) 07 February 2013 (2013-02-07)<br>entire document | 1-32 |

☐ Further documents are listed in the continuation of Box C.     ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 October 2022** | **18 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/076457**

| Patent document cited in search report | | | Publication date (day/month/year) | Patent family member(s) | Publication date (day/month/year) |
|---|---|---|---|---|---|
| CN | 112392361 | A | 23 February 2021 | None | |
| CN | 103786667 | A | 14 May 2014 | None | |
| CN | 109798041 | A | 24 May 2019 | None | |
| CN | 109505479 | A | 22 March 2019 | None | |
| CN | 111502443 | A | 07 August 2020 | None | |
| KR | 20050009124 | A | 24 January 2005 | None | |
| JP | 2013029004 | A | 07 February 2013 | None | |

Form PCT/ISA/210 (patent family annex) (January 2015)